# EUROPEAN PATENT APPLICATION

(11) **EP 4 787 246 A1**
(43) Date of publication of application: **05.08.2026**
(21) Application number: 25222840.8
(22) Date of filing: 12.12.2025
(51) Int. Cl.: G06N 5/022, G06N 20/00

(54) **METHOD FOR AUTOMATIC KNOWLEDGE REFINEMENT AND TASK EXECUTION**

(30) Priority: 29.01.2025 IN 202521007467
(71) Applicant: Tata Consultancy Services Limited, Mumbai, Maharashtra 400 021 (IN)
(72) Inventor: BANERJEE, Snehasis, 700091 Kolkata (IN); SINGH, Shivam, 500032 Hyderabad (IN); SWAMINATHAN, Karthik, 500032 Hyderabad (IN); DASH, Nabanita, 500032 Hyderabad (IN); SINGH, Ramandeep, 500032 Hyderabad (IN); SRIDHARAN, Mohan, Edinburgh, EH8 9AB (GB); KRISHNA, Madhava, 500032 Hyderabad (IN)
(74) Representative: Goddar, Heinz J.

(57) **Abstract**

This disclosure relates generally to a method for automatic knowledge refinement and task execution in robotic agents using a domain-agnostic knowledge base. Conventional Large Language Model (LLM) based methods break down complex tasks into sub-tasks but may generate incorrect steps or refer to unavailable objects or actions. While the robotic agents leverages prior-domain specific-knowledge, the unavailability of such structured knowledge in many practical domains and difficulty in updating data reliably makes agent-based task execution problematic. The integration of the domain-agnostic knowledge base with a Multi-modal Language Models (MLM) or LLM enables the robotic agent to perform tasks that span multiple domains without the constraints imposed by traditional, domain-specific knowledge bases. Combining the domain-agnostic knowledge base and the MLM allows for the generation of refined action sequences that are adaptable to the nuances of complex tasks, thereby enhancing the robotic agent's operational versatility and effectiveness.

## Description

### CROSS-REFERENCE TO RELATED APPLICATIONS AND PRIORITY

The present application claims priority to Indian application no. 202521007467, filed on January 29, 2025.

### TECHNICAL FIELD

The disclosure herein generally relates to knowledge engineering, cognitive robotics and, more particularly, to a method for automatic knowledge refinement and task execution.

### BACKGROUND

Robotic agents have gained widespread attention due to their ability to perform tasks in various domains such as manufacturing, healthcare, logistics, and domestic environments. Such robotic agents are typically programmed to execute predefined tasks or rely on specialized domain-specific knowledge bases to perform functions. Recent advancements in Artificial Intelligence (AI), particularly the arrival of Large Language Models (LLMs), have introduced new opportunities for enhancing robotic task execution by incorporating natural language understanding and reasoning capabilities. However, the integration of LLMs with domain-specific knowledge bases remains constrained by the inherent limitations of these knowledge repositories. There exists a need for a domain-agnostic knowledge base that, when utilized in conjunction with LLMs, can generate refined action sequences, thereby enabling robotic agents to perform complex, cross-domain tasks with increased efficiency and accuracy.

Existing systems often require domain-specific programming or manually curated knowledge bases, that are inflexible and limited to the specific domains for which they are designed. For instance, robotic agents in manufacturing rely on rule-based systems or custom-built ontologies tailored to the factory environment. Similarly, service robots in healthcare use predefined templates to interpret commands and execute tasks. These systems face several challenges such as domain dependency, inflexible task execution and difficulty in knowledge base curation.

Most prior art systems rely heavily on domain-specific knowledge bases, which limit their ability to generalize across diverse environments. Also, domain-specific knowledge bases demand significant resources for creation, maintenance, and updates. In some of the conventional systems robotic agents often fail to interpret or adapt to complex or ambiguous instructions provided by humans in natural language. A few prior systems lack the ability to handle new or unforeseen tasks dynamically, especially when instructions require multi-domain reasoning. Thus, the problem of automatic knowledge refinement and task execution in robotic agents remains a challenge for cross domain use cases or tasks.

### SUMMARY

Embodiments of the present disclosure present technological improvements as solutions to one or more of the above-mentioned technical problems recognized by the inventors in conventional systems. For example, in one embodiment, a system for automatic knowledge refinement and task execution in robotic agents is provided. The system includes a memory storing instructions; one or more Input/Output (I/O) interfaces; and one or more hardware processors coupled to the memory via the one or more I/O interfaces, wherein the one or more hardware processors are configured by the instructions to receive a task to be executed, wherein the task is decomposed into a plurality of sub-task by a Multi-modal Language Models (MLM) or Large Language Models (LLM). The decomposition enables the robotic agent to process each of the plurality of sub-task independently, facilitating efficient analysis and execution. Further, the robotic agent is configured to generate an action sequence based on the plurality of sub-tasks using the MLM or LLM. The robotic agent communicates with the MLM or LLM to interpret a task details from the plurality of sub-tasks and generates a plurality of queries based on the plurality of sub-tasks. Further, the MLM or LLM creates an action sequence based on the plurality of queries given, wherein the action sequence represents a logical series of steps derived from the sub-tasks.

Further, the robotic agent is configured to check the action sequence across a domain-agnostic knowledge graph to ensure whether the action sequence is executable by the robotic agent or not. At this step, the domain-agnostic is constructed dynamically by performing a sequence of steps as follows. Initially, a plurality of entities and a plurality of properties are received from the robotic agent based on working environment. The plurality of entities is then represented as a plurality of nodes and the plurality of properties as a plurality of edges. Later, based on the plurality of nodes and the plurality of edges an initial seed knowledge base (KB) is generated. The initial seed knowledge base also includes human input based on OWL/RDF semantic web format with commonly occurring entities and actions. Based on the relationship between the plurality of entities weights are allocated to the plurality of edges within the initial seed KB. Then, a state graph is generated using the plurality of edges and the plurality of nodes, wherein the state graph provides relationship between the plurality of entities and the plurality of features and wherein the state graph is fetched by the robotic agent based on the MLM prompt. Further, an attribute graph is also composed from the initial seed knowledge base and the state graph, wherein the attribute graph encodes known properties and action capabilities of the plurality of entities.

Later, querying the MLM and the initial seed KB using the plurality of queries generated from the plurality of sub-tasks. Then, the MLM output is combined with the multimodal data from a plurality of sensors of the robotic agent to identify new objects, features, properties, actions and relationships. Furthermore, a plurality of objects is extracted from the combined output, wherein the plurality of objects includes some of the new objects, features, properties, actions and relationships required for the task execution. Additionally, the attribute graph, KB and the state graph are updated using the plurality of objects. The KB and the state graph are updated from time to time using continuous querying of the MLM/LLM thereby creating a KB expansion driven by the MLM/LLM. Finally, the domain agnostic KB is generated based on the updated initial seed KB and the updated attribute graph.

Further, the robotic agent is configured by the instructions to generate a refined action sequence based on the MLM output and the domain agnostic knowledge graph. The refined action sequence is again verified using the domain-agnostic KB. wherein the refined action sequence is verified by comparing with the domain agnostic KB. If the refined action sequence is not executable the robotic agent identifies a set of unexpected actions within the refined action sequence. Then, the plurality of entities are extracted from the set of unexpected actions and checked across the domain agnostic KB. Later, the attribute graph corresponding to the plurality of entities are obtained from the domain agnostic KB. Then, the MLM is re-prompted using the state graph and the attribute graph corresponding to the set of unexpected actions. Again, the MLM output and the domain agnostic KG are cross checked in order to avoid any discrepancies. If there are further discrepancies, the robotic agent solicits natural language input to refine the domain agnostic KG. Then, updating the refined action sequence by incorporating the output from MLM and the domain agnostic KB. The updated refined action sequence based is verified by the robotic agent and identified whether the updated refined action sequence is executable or not. The process is repeated till the robotic agent obtains an executable refined action sequence. Lastly, the robotic agent executes the refined action sequence and completes the task.

In another aspect, a method for automatic knowledge refinement and task execution in robotic agents is provided. The method includes receiving via a robotic agent, a task to be executed, wherein the task is decomposed into a plurality of sub-task by a Multi-modal Language Models (MLM) or Large Language Models (LLM). The decomposition enables the robotic agent to process each of the plurality of sub-task independently, facilitating efficient analysis and execution. Further, the method includes generating an action sequence based on the plurality of sub-tasks using the MLM or LLM. The robotic agent communicates with the MLM or LLM to interpret the task details from the plurality of sub-tasks and generates a plurality of queries based on the plurality of sub-tasks. Further, the MLM or LLM creates an action sequence based on the plurality of queries given, wherein the action sequence represents a logical series of steps derived from the sub-tasks.

Further, the method includes checking or verifying via the robotic agent, the action sequence across a domain-agnostic knowledge graph to ensure whether the action sequence is executable by the robotic agent or not. At this step, the domain-agnostic is constructed dynamically by performing a sequence of steps as follows. Initially, a plurality of entities and a plurality of properties are received from the robotic agent based on working environment. The plurality of entities is then represented as a plurality of nodes and the plurality of properties as a plurality of edges. Later, based on the plurality of nodes and the plurality of edges an initial seed knowledge base (KB) is generated. The initial seed knowledge base also includes human input based on OWL/RDF semantic web format with commonly occurring entities and actions. Based on the relationship between the plurality of entities weights are allocated to the plurality of edges within the initial seed KB. Then, a state graph is generated using the plurality of edges and the plurality of nodes, wherein the state graph provides relationship between the plurality of entities and the plurality of features and wherein the state graph is fetched by the robotic agent based on the MLM prompt. Further, an attribute graph is also composed from the initial seed knowledge base and the state graph, wherein the attribute graph encodes known properties and action capabilities of the plurality of entities.

Later, querying the MLM and the initial seed KB using the plurality of queries generated from the plurality of sub-tasks. Then, the MLM output is combined with the multimodal data from a plurality of sensors of the robotic agent to identify new objects, features, properties, actions and relationships. Furthermore, a plurality of objects is extracted from the combined output, wherein the plurality of objects includes some of the new objects, features, properties, actions and relationships required for the task execution. Additionally, the attribute graph, KB and the state graph are updated using the plurality of objects. The KB and the state graph are updated from time to time using continuous querying of the MLM/LLM thereby creating a KB expansion driven by the MLM/LLM. Finally, the domain agnostic KB is generated based on the updated initial seed KB and the updated attribute graph.

Further, the method includes generating via the robotic agent, a refined action sequence based on the MLM output and the domain agnostic knowledge graph. The refined action sequence is again verified using the domain-agnostic KB. wherein the refined action sequence is verified by comparing with the domain agnostic KB. If the refined action sequence is not executable the robotic agent identifies a set of unexpected actions within the refined action sequence. Then, the plurality of entities are extracted from the set of unexpected actions and checked across the domain agnostic KB. Later, the attribute graph corresponding to the plurality of entities are obtained from the domain agnostic KB. Then, the MLM is re-prompted using the state graph and the attribute graph corresponding to the set of unexpected actions. Again, the MLM output and the domain agnostic KG are cross checked in order to avoid any discrepancies. If there are further discrepancies, the robotic agent solicits natural language input to refine the domain agnostic KG. Then, updating the refined action sequence by incorporating the output from MLM and the domain agnostic KB. The updated refined action sequence based is verified by the robotic agent and identified whether the updated refined action sequence is executable or not. The process is repeated till the robotic agent obtains an executable refined action sequence. Lastly, the robotic agent executes the refined action sequence and completes the task.

In yet another aspect, a non-transitory computer readable medium for a method for automatic knowledge refinement and task execution in robotic agents is provided. The method includes receiving via a robotic agent, a task to be executed, wherein the task is decomposed into a plurality of sub-task by a Multi-modal Language Models (MLM) or Large Language Models (LLM). The decomposition enables the robotic agent to process each of the plurality of sub-task independently, facilitating efficient analysis and execution. Further, the method includes generating an action sequence based on the plurality of sub-tasks using the MLM or LLM. The robotic agent communicates with the MLM or LLM to interpret the task details from the plurality of sub-tasks and generates a plurality of queries based on the plurality of sub-tasks. Further, the MLM or LLM creates an action sequence based on the plurality of queries given, wherein the action sequence represents a logical series of steps derived from the sub-tasks.

Further, the method includes checking or verifying via the robotic agent, the action sequence across a domain-agnostic knowledge graph to ensure whether the action sequence is executable by the robotic agent or not. At this step, the domain-agnostic is constructed dynamically by performing a sequence of steps as follows. Initially, a plurality of entities and a plurality of properties are received from the robotic agent based on working environment. The plurality of entities is then represented as a plurality of nodes and the plurality of properties as a plurality of edges. Later, based on the plurality of nodes and the plurality of edges an initial seed knowledge base (KB) is generated. The initial seed knowledge base also includes human input based on OWL/RDF semantic web format with commonly occurring entities and actions. Based on the relationship between the plurality of entities weights are allocated to the plurality of edges within the initial seed KB. Then, a state graph is generated using the plurality of edges and the plurality of nodes, wherein the state graph provides relationship between the plurality of entities and the plurality of features and wherein the state graph is fetched by the robotic agent based on the MLM prompt. Further, an attribute graph is also composed from the initial seed knowledge base and the state graph, wherein the attribute graph encodes known properties and action capabilities of the plurality of entities.

Later, querying the MLM and the initial seed KB using the plurality of queries generated from the plurality of sub-tasks. Then, the MLM output is combined with the multimodal data from a plurality of sensors of the robotic agent to identify new objects, features, properties, actions and relationships. Furthermore, a plurality of objects is extracted from the combined output, wherein the plurality of objects includes some of the new objects, features, properties, actions and relationships required for the task execution. Additionally, the attribute graph, KB and the state graph are updated using the plurality of objects. The KB and the state graph are updated from time to time using continuous querying of the MLM/LLM thereby creating a KB expansion driven by the MLM/LLM. Finally, the domain agnostic KB is generated based on the updated initial seed KB and the updated attribute graph.

Further, the method includes generating via the robotic agent, a refined action sequence based on the MLM output and the domain agnostic knowledge graph. The refined action sequence is again verified using the domain-agnostic KB. wherein the refined action sequence is verified by comparing with the domain agnostic KB. If the refined action sequence is not executable the robotic agent identifies a set of unexpected actions within the refined action sequence. Then, the plurality of entities are extracted from the set of unexpected actions and checked across the domain agnostic KB. Later, the attribute graph corresponding to the plurality of entities are obtained from the domain agnostic KB. Then, the MLM is re-prompted using the state graph and the attribute graph corresponding to the set of unexpected actions. Again, the MLM output and the domain agnostic KG are cross checked in order to avoid any discrepancies. If there are further discrepancies, the robotic agent solicits natural language input to refine the domain agnostic KG. Then, updating the refined action sequence by incorporating the output from MLM and the domain agnostic KB. The updated refined action sequence based is verified by the robotic agent and identified whether the updated refined action sequence is executable or not. The process is repeated till the robotic agent obtains an executable refined action sequence. Lastly, the robotic agent executes the refined action sequence and completes the task.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary title system according to some embodiments of the present disclosure.
FIG. 2 is a functional block diagram according to some embodiments of the present disclosure.
FIGS. 3A and 3B illustrates generation of action sequence based on given task and success/failed task execution in accordance with some embodiments of the present disclosure.
FIGS. 4A through 4D depicts an overview of the system for knowledge refinement and task execution by robotic agent working in a kitchen according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present invention relates to a processor-implemented method that integrates advanced machine learning models, such as Multi-modal Language Models (MLM) or Large Language Models (LLM), with domain-agnostic knowledge graphs to enable the effective execution of complex tasks by a robotic agent. The disclosed method generates a refined action sequence that enables a robotic agent to execute cross domain tasks by using a combination of Multi-modal Language Models (MLM) or Large Language Models (LLM) along with a domain-agnostic knowledge base.

Robotic agents have gained widespread attention due to their ability to perform tasks in various domains such as manufacturing, healthcare, logistics, and domestic environments. These agents are typically programmed to execute predefined tasks or rely on specialized domain-specific knowledge bases to perform their functions. Recent advancements in Artificial Intelligence (AI), particularly the advent of Large Language Models (LLMs), have introduced new opportunities for enhancing robotic task execution by incorporating natural language understanding and domain-independent reasoning capabilities.

Existing systems often require domain-specific programming or manually curated knowledge bases, which are inflexible and limited to the specific domains for which they are designed. For instance, robots in manufacturing rely on rule-based systems or custom-built ontologies tailored to the factory environment. Similarly, service robots in healthcare use predefined templates to interpret commands and execute tasks. These systems face several challenges such as domain dependency, inflexible task execution and difficulty in knowledge base curation.

To overcome the challenges and drawbacks of the existing system, a method for automatic knowledge refinement and task execution in robotic agents are disclosed. Unlike conventional systems, the disclosed method does not require tedious knowledge base curation, or rule based ontologies which may cause inflexible task execution. The disclosed method ensures that tasks are executed with improved accuracy and adaptability by decomposing them into sub-tasks, generating actionable sequences, and refining them through knowledge graph validation. The disclosed method integrates advanced machine learning models, such as Multi-modal Language Models (MLM) or Large Language Models (LLM), with domain-agnostic knowledge graphs to enable the effective execution of complex tasks by the robotic agent. The disclosed method ensures that tasks are executed with improved accuracy and adaptability by decomposing them into sub-tasks, generating actionable sequences, and refining them through knowledge graph validation.

The disclosed system for knowledge refinement and task execution comprises a comprehensive knowledge base, herein referred as a domain-agnostic knowledge base, aggregates information from a wide array of domains, ensuring its applicability to diverse tasks. The domain-agnostic knowledge base is constructed dynamically through the systematic collection and organization of data from queries, various sources, including textual, visual, and experiential inputs. The data is processed and structured to form a cohesive repository of information that is not confined to any single domain.

In operation, the MLM/LLM interfaces with the domain-agnostic knowledge base to interpret and process the input data. Upon receiving a task, the MLM/LLM queries the knowledge base to retrieve relevant information, which it then utilizes to generate a sequence of actions tailored to the task requirements. This process involves the LLM parsing the input, identifying pertinent data within the knowledge base, and formulating a coherent action plan that the robotic agent can execute.

Conventional systems rely on domain-specific knowledge bases, which are tailored for single applications and are dependent on predefined domain-specific rules and data structures. Such knowledge bases are not readily available for numerous practical domains, limiting their applicability and scalability. Furthermore, modern data-driven methods often hinder reliable and transparent revisions of the encoded knowledge over time, thereby complicating the process of generating accurate and efficient action sequences or sub-tasks. Domain-dependent systems necessitate frequent updates and fine-tuning to ensure optimal performance, especially for generating refined action sequences. To address these limitations, the disclosed method utilizes a domain-agnostic knowledge base that is refined and updated continuously through the integration of MLMs/ LLMs and natural language inputs if required. Thus, the disclosed method enables the generation of a refined action sequence, which assists robotic agents in executing tasks successfully, thereby providing a scalable, adaptable, and efficient solution for task planning across diverse and dynamic domains.

The integration of the domain-agnostic knowledge base with the LLM enables the robotic agent to perform tasks that span multiple domains without the constraints imposed by traditional, domain-specific knowledge bases. This synergy allows for the generation of refined action sequences that are adaptable to the nuances of complex tasks, thereby enhancing the robotic agent's operational versatility and effectiveness.

Furthermore, the system incorporates a feedback mechanism wherein the outcomes of executed tasks are analyzed and used to update the knowledge base. This continuous learning loop ensures that the knowledge base evolves over time, incorporating new information and experiences to improve future task performance.

The present invention thus provides a robust framework for enhancing the capabilities of robotic agents, enabling them to execute complex, cross-domain tasks with improved efficiency and adaptability. The present invention helps the robotic agent to execute complex tasks involving cross-domain entities without the need of several domain specific repositories according to the tasks. Also, in the present invention the robotic agent responds to an unresolved mismatch or erroneous outcome by re-prompting the LLM with additional -what? from the domain-agnostic knowledge base and then generates a refined action sequence. By leveraging a domain-agnostic knowledge base in conjunction with LLMs, the invention overcomes the limitations of traditional robotic systems and paves the way for more versatile and intelligent robotic applications.

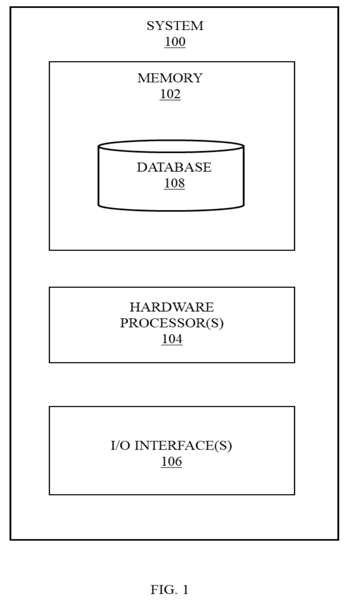

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG.1 is a functional block diagram of a system 100 for automatic knowledge refinement and task execution in robotic agents, in accordance with some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors here a robotic agent 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure.

The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

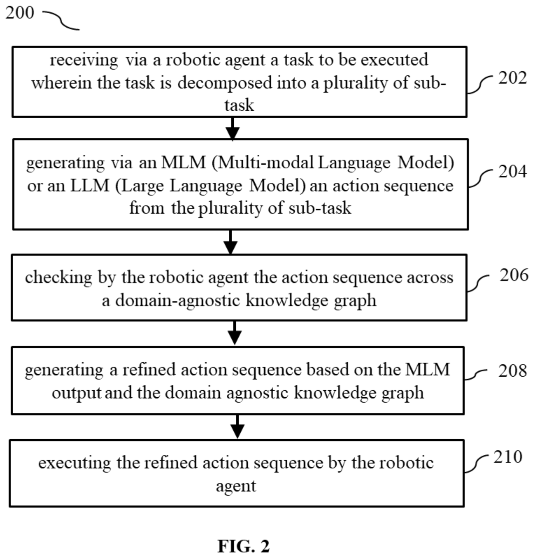

FIG. 2 illustrates a method 200 for automatic knowledge refinement and task execution in robotic agents implemented using FIG. 1, in accordance with some embodiments of the present disclosure. At step 202 of the method 200, a robotic agent is configured to receive task to be executed, wherein the task is decomposed into a plurality of sub-task by a Multi-modal Language Models (MLM) or Large Language Models (LLM). The MLM or LLM is used as a service by the robotic agent instead of having an LLM directly built into the robotic agent.

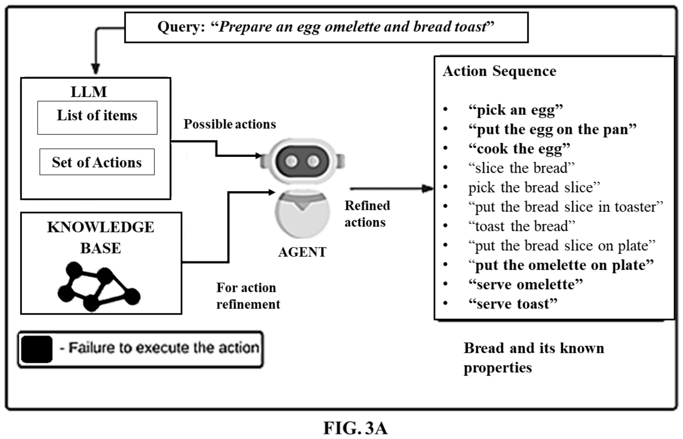

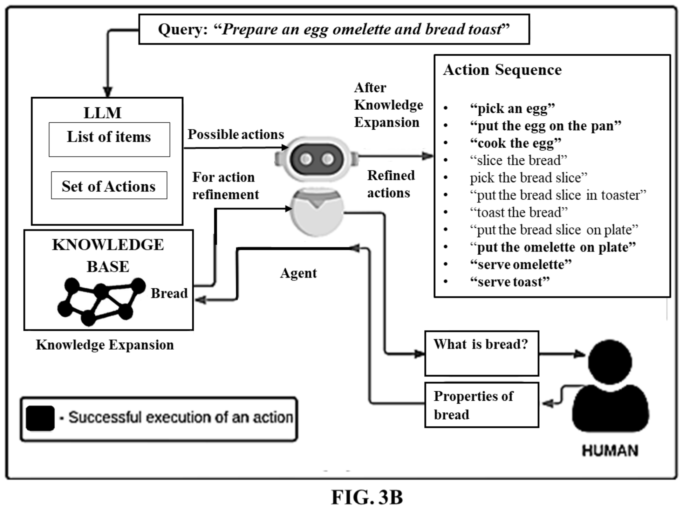

For example, the robotic agent receives a task to 'prepare an egg omlette and bread toast' as depicted in FIGS. 3A and 3B. The task is then decomposed into a plurality of sub-tasks as depicted in FIG. 3A such as 'pick an egg', 'put the egg in a pan' and 'cook the egg' etc... by utilizing the LLM. The decomposition of task enables the robotic agent to process each of the plurality of sub-task independently, facilitating efficient analysis and execution. At step 204 of the method 200, the robotic agent is configured to generate an action sequence based on the plurality of sub-tasks using the MLM or LLM. The robotic agent communicates with the MLM or LLM to interpret a task details from the plurality of sub-tasks and generates a plurality of queries based on the plurality of sub-tasks. Further, the MLM or LLM creates an action sequence based on the plurality of queries given, wherein the action sequence represents a logical series of steps derived from the sub-tasks. Now FIGS. 3A and 3B illustrates generation of action sequence based on the task and success/failed task execution in accordance with some embodiments of the present disclosure. As shown in FIG. 3A when the task is given to the robotic agent to 'prepare an egg omlette and bread toast', the plurality of queries is generated by the robotic agent based on the plurality of sub-tasks. The plurality of queries are passed to the LLM or MLM to generate the action sequence. The action sequence generated by the LLM or the MLM is represented as output O1, wherein the output O1 comprise a list of items needed and possible actions. Now, a Knowledge Base (KB) refines the output O1 and generates an output O2 after refining the output O1. The output O2 contains a set of possible actions which are enlisted in the KB. Further, the set of possible actions are passed to the action sequence. However, the KB does not have an entry on any one object or item say, 'bread' that is to be mapped to the actions sequence. Hence, the task fails.

For any given task, the MLM or the LLM provides a generic sequence of abstract actions that are refined using domain-specific knowledge in the Knowledge Base or Knowledge Graph. Now, referring to FIG. 3B when the robotic agent detects the 'bread' and properties of 'bread' are not in the KB, the robotic agent returns that 'bread' is unidentified in the KB. However, the action sequence from the LLM or MLM identifies 'bread' and properties of 'bread' and then, the robotic agent updates the KB in the form of { <subject> <predicate> <object> }, like 'bread' has specific properties. So, knowledge expansion happens by expanding edges (properties) and nodes (subjects / object) in the KB by similarity matching closely matched entities based on word2vec distance in vector space. So, due to this knowledge refinement, the action sequence gets refined as shown - enabling the achievement of completing the task, which would not have been possible without the added knowledge. Furthermore, if the LLM or MLM is not able to provide details of 'bread', the robotic agent is able to query humans to inquire about 'bread'. Then humans declare many properties of 'bread', and the information is added to the knowledge base (KB).

Further, at step 206 of the method 200, the robotic agent is configured to check the action sequence across a domain-agnostic knowledge graph to ensure whether the action sequence is executable by the robotic agent or not. At this step, the domain-agnostic knowledge base is constructed dynamically by performing a sequence of steps as follows. Initially, a plurality of entities and a plurality of properties are received from the robotic agent based on working environment. The plurality of entities includes but not limited to the environment around the robot agent, the objects and regions within the environment, humans present in the environment and the plurality of properties are specific attributes of the plurality of entities such as capability of the robotic agent includes but not limited to load capability, number of sensors on board and capability to compute etc. The plurality of entities is then represented as a plurality of nodes and the plurality of properties as a plurality of edges. Later, based on the plurality of nodes and the plurality of edges an initial seed knowledge base (KB) is generated. The initial seed knowledge base also includes human input based on OWL/RDF semantic web format with commonly occurring entities and actions. Based on the relationship between the plurality of entities weights are allocated to the plurality of edges within the initial seed KB. Then, a state graph is generated using the plurality of edges and the plurality of nodes, wherein the state graph provides relationship between the plurality of entities and the plurality of features and wherein the state graph is fetched by the robotic agent based on the MLM prompt. Further, an attribute graph is also composed from the initial seed knowledge base and the state graph, wherein the attribute graph encodes known properties and action capabilities of the plurality of entities.

Later, querying the MLM and the initial seed KB using the plurality of queries generated from the plurality of sub-tasks. Then, the MLM output is combined with the multimodal data from a plurality of sensors of the robotic agent to identify new objects, features, properties, actions and relationships. Furthermore, a plurality of objects is extracted from the combined output, wherein the plurality of objects includes some of the new objects, features, properties, actions and relationships required for the task execution. Additionally, the attribute graph, KB and the state graph are updated using the plurality of objects. The KB and the state graph are updated from time to time using continuous querying of the MLM/LLM thereby creating a KB expansion driven by the MLM/LLM. Finally, the domain agnostic KB is generated based on the updated initial seed KB and the updated attribute graph.

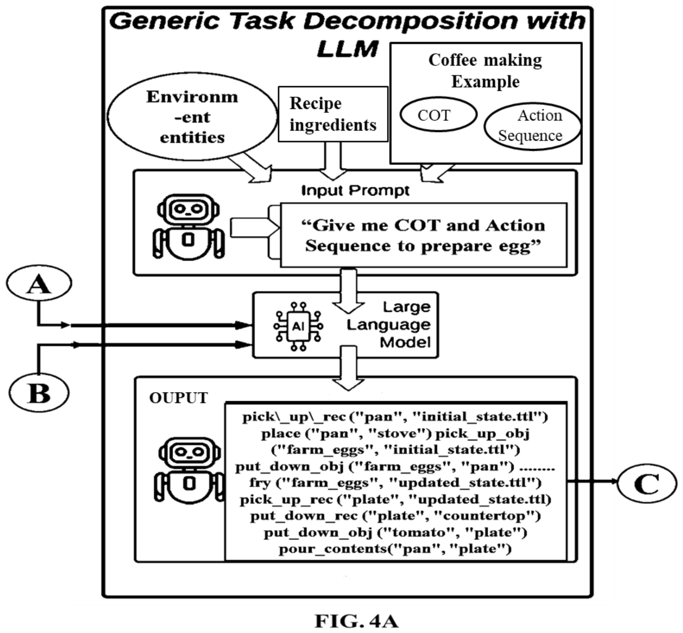

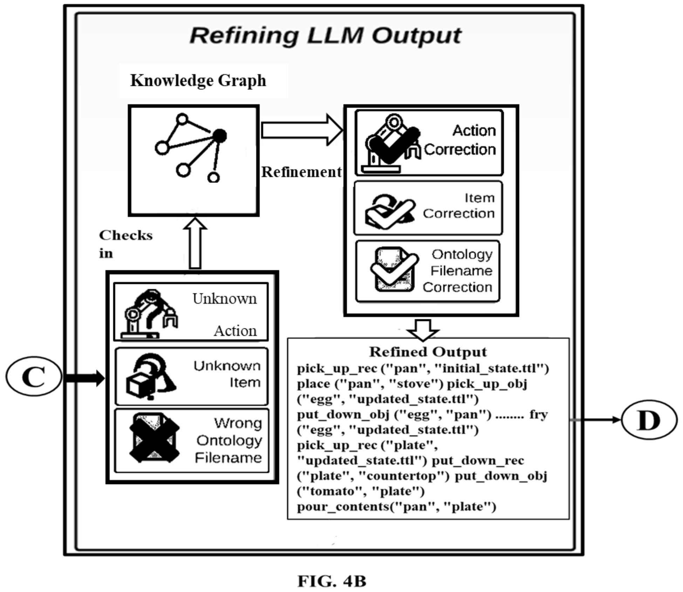

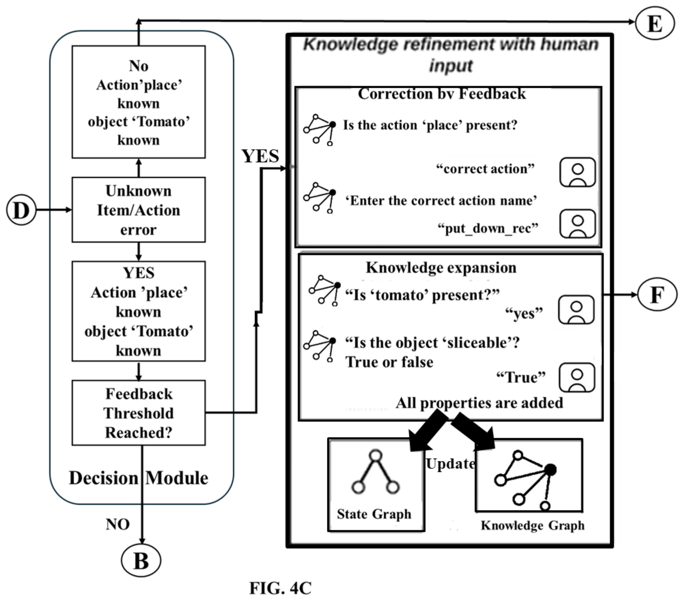

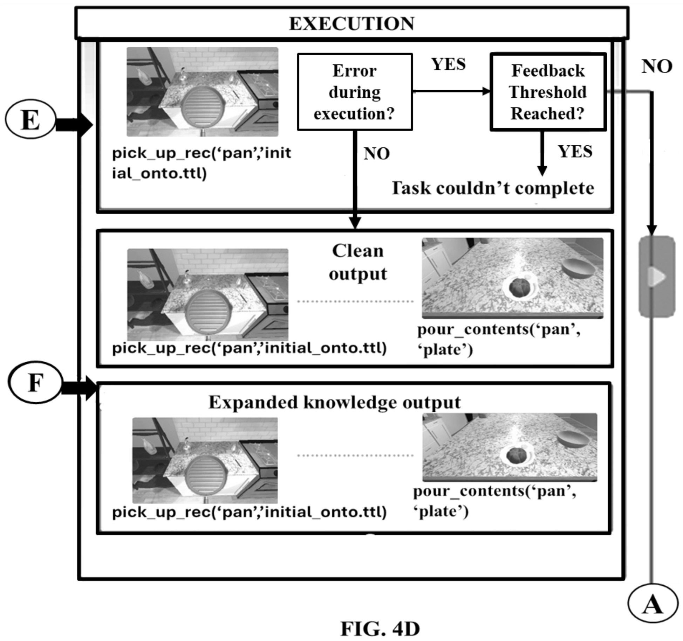

Now at step 208 of the method 200, the robotic agent is configured by the instructions to generate a refined action sequence based on the MLM output and the domain agnostic knowledge graph. The refined action sequence is again verified using the domain-agnostic KB. The refined action sequence is verified by comparing with the domain agnostic KB. If the refined action sequence is not executable the robotic agent identifies a set of unexpected actions within the refined action sequence as illustrated in FIGS. 4A through 4D. Then, the plurality of entities are extracted from the set of unexpected actions and checked across the domain agnostic KB. Later, the attribute graph corresponding to the plurality of entities are obtained from the domain agnostic KB. Then, the MLM is re-prompted using the state graph and the attribute graph corresponding to the set of unexpected actions. Further, the MLM output and the domain agnostic KG are cross checked in order to avoid any discrepancies. If the sequence refers to objects, attributes, or actions that cannot be resolved using the Knowledge Graph, or leads to unexpected outcomes, the domain-agnostic Knowledge Base is expanded by continuous querying with the help of the MLM/LLM. The knowledge expansion is continued till the refined action sequence is executable by the robotic agent as depicted in FIG. 4. If there are further discrepancies, the robotic agent solicits natural language input to refine the domain agnostic KG. Thereafter, the refined action sequence is updated by incorporating the output from MLM and the domain agnostic KB. The updated refined action sequence based is verified by the robotic agent and identified whether the updated refined action sequence is executable or not. The process is repeated till the robotic agent obtains an executable refined action sequence. Lastly, at step 210 of the method 200, the robotic agent executes the refined action sequence.

FIG. 4 depicts an overview of the system for knowledge refinement and task execution by robotic agent working in a kitchen according to some embodiments of the present disclosure. Here, the robotic agent is given a task to prepare a target dish. In the overview (a) Input Chain-of-Thought (COT) prompt contains the target dish, available ingredients, and an example of input and output action sequence (for task of making coffee), to obtain an output action sequence; (b) Any mismatch (e.g., in object classes, actions) between LLM output and KG are identified and action sequence is revised if possible; (c) Agent attempts to resolve any remaining errors or unexpected outcomes by re-prompting LLM, with errors that persist being addressed by soliciting natural language input and updating KG; (d) Revised/corrected action sequence is executed.

For example, if a robotic agent assisting in cooking tasks in a kitchen has access to relevant objects and ingredients for many dishes but it does not have the recipes. When the robotic agent is asked to prepare any particular dish, *τi* , which the robotic agent has no knowledge about apriori, the robotic agent queries the MLM or the LLM along with the context to obtain a sequence of abstract actions (sub-tasks), i.e., 〈*a*1,..., *ami*〉 such as picking up eggs and breaking the eggs over a skillet. The LLM also provides a list of ingredients the robotic agents is required to have to prepare the dish. This sequence of abstract actions is checked against a knowledge graph (KG) with some domain-specific information in the form of existing objects and attributes that including a set of actions that can be performed on the objects and the attributes. The robotic agent cross verifies whether the list of ingredients provided and the sequence of abstract actions against this KG and identifies the executable part and the non-executable parts (which shows discrepancy is executing). The robotic agent iteratively tries to resolve and discrepancy between the LLM output and KG by repeated querying, answering and updating the domain agnostic knowledge base within it and thereby updating the KG. For e.g., KG states 'there is no skillet' or that 'an egg can only be cracked', by finding replacements, e.g., 'crack the egg over a pan' by utilizing the domain agnostic knowledge base. The dynamic updation of the domain agnostic knowledge base and thereby the KG leads to continuous expansion of the robotic agents knowledge about the environment and the objects within the environment, irrespective of domain. Using this knowledge the robotic agent is able to receive a refined action sequence and thereby executing the task, here preparing the dish. Thus successful task execution is accomplished by the robotic agent. If the discrepancy is not resolved, or if executing the action sequence does not provide the desired outcome, the robotic agent identifies relevant actions and solicits for natural language input to refine the KG, e.g., add knowledge of objects or the attributes associated to the objects, and provides an action sequence to complete the task. The agent is assumed to be able to execute these actions.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of automatic knowledge refinement and task execution in robotic agents using a domain -agnostic knowledge base. The integration of the domain-agnostic knowledge base with a Multi-modal Language Models (MLM) or Large Language Models (LLM) enables the robotic agent to perform tasks that span multiple domains without the constraints imposed by traditional, domain-specific knowledge bases. Combining the domain-agnostic knowledge base and the MLM allows for the generation of refined action sequences that are adaptable to the nuances of complex tasks, thereby enhancing the robotic agent's operational versatility and effectiveness.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for automatic knowledge refinement and task execution in robotic agents, the method comprising:
receiving via a robotic agent a task to be executed wherein the task is decomposed into a plurality of sub-task (202);
generating via a Multi-modal Language Model (MLM) or an LLM (Large Language Model) an action sequence from each of the plurality of sub-task (204);
checking via the robotic agent the action sequence across a domain-agnostic knowledge graph (206), wherein the domain-agnostic knowledge graph is constructed dynamically by performing a sequence of steps comprising:
receiving a plurality of entities and a plurality of properties from the robotic agent based on working environment;
demonstrating the plurality of entities as a plurality of nodes and the plurality of properties as a plurality of edges;
generating an initial seed knowledge base (KB) based on the plurality of nodes and the plurality of edges;
allocating weights to the plurality of edges based on the relationship between the plurality of entities;
generating a state graph using the plurality of edges and the plurality of nodes;
generating an attribute graph from the initial seed knowledge base and the state graph;
querying the MLM and the initial seed KB using a plurality of queries generated from the plurality of sub-tasks;
combining the MLM output with the multimodal data from a plurality of sensors of the robotic agent;
extracting a plurality of objects from the combined output;
updating the attribute graph, KB and the state graph using the extracted data; and
generating the domain agnostic KB based on the updated initial seed KB and the updated attribute graph;
generating via the robotic agent, a refined action sequence based on the MLM output and the domain agnostic knowledge graph (208); and
executing via the robotic agent the refined action sequence (210).

2. The processor implemented method as claimed in claim 1, wherein the generation of the action sequence comprises of:
receiving each of the plurality of sub-tasks by the MLM;
generating a plurality of queries from each of the plurality of sub-tasks;
feeding the plurality of queries to the MLM; and
generating, by the MLM, the action sequence based on the plurality of queries.

3. The processor implemented method as claimed in claim 1, wherein if the refined action sequence is executable, the plurality of sub-tasks are performed by the robotic agent, and wherein if the refined action sequence is non executable, the robotic agent identifies a set of unexpected actions in the refined action sequence.

4. The processor implemented method as claimed in claim 1, wherein the state graph provides a relationship between the plurality of entities and the plurality of features, and wherein the state graph is fetched by the robotic agent based on the MLM prompt.

5. The processor implemented method as claimed in claim 1, wherein the refined action sequence is verified by:
comparing the refined action sequence with the domain agnostic KB;
identifying a set of unexpected actions within the refined action sequence;
extracting the plurality of entities from the set of unexpected actions;
checking the plurality of entities extracted across the domain agnostic KB;
obtaining the attribute graph corresponding to the plurality of entities from the domain agnostic KB;
re-prompting the MLM using the state graph and the attribute graph corresponding to the set of unexpected actions;
checking whether there is any discrepancy between MLM output and the domain agnostic KG, wherein
if the discrepancy is present, the robotic agent solicits a natural language input to refine the domain agnostic KG; and
updating the refined action sequence by incorporating the output from MLM and the domain agnostic KB.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a task to be executed wherein the task is decomposed into a plurality of sub-task;
generate via an MLM (Multi-modal Language Model) or an LLM (Large Language Model) an action sequence from the plurality of sub-task;
check the action sequence across a domain-agnostic knowledge graph, wherein the domain-agnostic knowledge graph is constructed dynamically by performing a sequence of steps comprises:
receiving a plurality of entities and a plurality of properties from the robotic agent based on working environment;
demonstrating the plurality of entities as a plurality of nodes and the plurality of properties as a plurality of edges;
generating an initial seed knowledge base (KB) based on the plurality of nodes and the plurality of edges;
allocating weights to the plurality of edges based on the relationship between the plurality of entities;
generating a state graph using the plurality of edges and the plurality of nodes;
generating an attribute graph from the initial seed knowledge base and the state graph;
querying the MLM and the initial seed KB using a plurality of queries generated from the plurality of sub-tasks;
combining the MLM output with the multimodal data from a plurality of sensors of the robotic agent;
extracting a plurality of objects from the combined output;
updating the attribute graph, KB and the state graph using the extracted data; and
generating the domain agnostic KB based on the updated initial seed KB and the updated attribute graph;
generate a refined action sequence based on the MLM output and the domain agnostic knowledge graph; and
execute the refined action sequence by the robotic agent.

7. The system as claimed in claim 6, wherein the generation of the action sequence comprises of:
receiving each of the plurality of sub-tasks by the MLM;
generating a plurality of queries from each of the plurality of sub-tasks;
feeding the plurality of queries to the MLM; and
generating, by the MLM, the action sequence based on the plurality of queries.

8. The system as claimed in claim 6, wherein if the refined action sequence is executable, the plurality of sub-tasks are performed by the robotic agent, and wherein if the refined action sequence is non executable, the robotic agent identifies a set of unexpected actions in the refined action sequence.

9. The system as claimed in claim 6, wherein the state graph provides a relationship between the plurality of entities and the plurality of features and wherein the state graph is fetched by the robotic agent based on the MLM prompt.

10. The system as claimed in claim 6, wherein the refined action sequence is verified by:
comparing the refined action sequence with the domain agnostic KB;
identifying a set of unexpected actions within the refined action sequence;
extracting the plurality of entities from the set of unexpected actions;
checking the plurality of entities extracted across the domain agnostic KB;
obtaining the attribute graph corresponding to the plurality of entities from the domain agnostic KB;
re-prompting the MLM using the state graph and the attribute graph corresponding to the set of unexpected actions;
checking whether there is any discrepancy between MLM output and the domain agnostic KG, wherein If the discrepancy is present, agent solicits a natural language input to refine the domain agnostic KG; and
updating the refined action sequence by incorporating the output from MLM and the domain agnostic KB.

11. One or non-transitory machine-readable information storage mediums comprising one or more instructions which when executed by one or more hardware processors cause:
receiving a task to be executed wherein the task is decomposed into a plurality of sub-task;
generating via an MLM (Multi-modal Language Model) or an LLM (Large Language Model) an action sequence from the plurality of sub-task;
checking the action sequence across a domain-agnostic knowledge graph, wherein the domain-agnostic knowledge graph is constructed dynamically by performing a sequence of steps comprises:
receiving a plurality of entities and a plurality of properties from the robotic agent based on working environment;
demonstrating the plurality of entities as a plurality of nodes and the plurality of properties as a plurality of edges;
generating an initial seed knowledge base (KB) based on the plurality of nodes and the plurality of edges;
allocating weights to the plurality of edges based on the relationship between the plurality of entities;
generating a state graph using the plurality of edges and the plurality of nodes;
generating an attribute graph from the initial seed knowledge base and the state graph;
querying the MLM and the initial seed KB using a plurality of queries generated from the plurality of sub-tasks;
combining the MLM output with the multimodal data from a plurality of sensors of the robotic agent;
extracting a plurality of objects from the combined output;
updating the attribute graph, KB and the state graph using the extracted data; and
generating the domain agnostic KB based on the updated initial seed KB and the updated attribute graph;
generating a refined action sequence based on the MLM output and the domain agnostic knowledge graph;
executing the refined action sequence by the robotic agent.

12. The one or more non-transitory machine-readable information storage mediums as claimed in claim 11, wherein the generation of the action sequence comprises of:
receiving each of the plurality of sub-tasks by the MLM;
generating a plurality of queries from each of the plurality of sub-tasks;
feeding the plurality of queries to the MLM; and
generating, by the MLM, the action sequence based on the plurality of queries.

13. The one or more non-transitory machine-readable information storage mediums as claimed in claim 11, wherein if the refined action sequence is executable, the plurality of sub-tasks are performed by the robotic agent, and wherein if the refined action sequence is non executable, the robotic agent identifies a set of unexpected actions in the refined action sequence.

14. The one or more non-transitory machine-readable information storage mediums as claimed in claim 11, wherein the state graph provides a relationship between the plurality of entities and the plurality of features and wherein the state graph is fetched by the robotic agent based on the MLM prompt.

15. The one or more non-transitory machine-readable information storage mediums as claimed in claim 11, wherein the refined action sequence is verified by:
comparing the refined action sequence with the domain agnostic KB;
identifying a set of unexpected actions within the refined action sequence;
extracting the plurality of entities from the set of unexpected actions;
checking the plurality of entities extracted across the domain agnostic KB;
obtaining the attribute graph corresponding to the plurality of entities from the domain agnostic KB;
re-prompting the MLM using the state graph and the attribute graph corresponding to the set of unexpected actions;
checking whether there is any discrepancy between MLM output and the domain agnostic KG, wherein if the discrepancy is present, agent solicits a natural language input to refine the domain agnostic KG; and updating the refined action sequence by incorporating the output from MLM and the domain agnostic KB.
